# EUROPEAN PATENT APPLICATION

(11) **EP 2 236 234 A1**
(43) Date of publication of application: **06.10.2010**
(21) Application number: 10250466.9
(22) Date of filing: 12.03.2010
(51) Int. Cl.: B23D 59/02, B28D 7/02, B23Q 11/10

(54) **Saw with coolant supply**

(30) Priority: 01.04.2009 US 416579
(71) Applicant: Techtronic Power Tools Technology Limited, Road Town, Tortola (VG)
(72) Inventor: Shao, Ping, Dongguan, Guangdong 523945 (CN); Liu, Shi Chun, Dongguan, Guangdong 523945 (CN); Li, Ping, Dongguan, Guangdong 523945 (CN); Brazell, Kenneth M., Piedmont, SC 29673 (US)
(74) Representative: Every, David Aidan

(57) **Abstract**

A saw for use with a blade coolant that includes a main body, a blade supported for rotation by the main body, and a drive member coupled to the blade and operable to rotate the blade. The saw further includes a coolant supply that is removably coupled to the main body and configured to store the blade coolant. A valve is coupled to the coolant supply, and the valve includes a valve member movable between an open position and a closed position. The valve member is held in the open position when the coolant supply is connected to the main body of the saw and the valve member is biased toward the closed position when the coolant supply is disconnected from the main body of the saw.

## Description

### BACKGROUND

The present invention relates to saws, and more particularly, to circular tile saws that utilize blade coolants.

Circular saws are often used to cut along flat surfaces of work-pieces, such as plywood and wood utilized for framing, often 2 x 4's, 2 x 6's, etc. In other applications, circular saws are utilized to cut relatively hard materials, such as ceramic tiles and the like. In such applications, it can be desirable to cool the blade of the circular saw using a blade coolant. Water is one known blade coolant.

An object of the invention is to mitigate or obviate to some degree one or more problems associated with known saws having a coolant supply.

### SUMMARY

In one embodiment, the invention provides a saw configured for use with a blade coolant. The saw includes a main body, a blade supported for rotation by the main body, and a drive member coupled to the blade and operable to rotate the blade. The saw further includes a coolant supply that is removably coupled to the main body and configured to store the blade coolant. A valve is coupled to the coolant supply, and the valve includes a valve member movable between an open position and a closed position. The valve member is held in the open position when the coolant supply is connected to the main body of the saw and the valve member is biased toward the closed position when the coolant supply is disconnected from the main body of the saw.

The valve may include a biasing member that biases the valve member toward the closed position, wherein the valve member contacts the main body to retain the valve member in the open position when the coolant supply is connected to the main body and the biasing member biases the valve member into the closed position when the coolant supply is disconnected from the main body.

The main body may include a side cover that at least partially surrounds the blade and at least partially defines an aperture sized to receive a portion of the coolant supply. The coolant supply may include a valve cap, and wherein the valve cap is at least partially received in the aperture to connect the coolant supply to the main body of the saw.

The coolant supply may includes a container and a valve cap threadably engaged with the container. The valve cap may include a cup-shaped portion and a stationary extension coupled to the cup-shaped portion, wherein the valve member at least partially extends beyond the stationary extension of the valve cap when the valve member is in the closed position. A biasing member may be at least partially disposed within the stationary extension to bias the valve member toward the closed position. The stationary extension may contact the main body of the saw to move and retain the valve member in the open position when the coolant supply is connected to the main body.

The main body may include a side cover that at least partially surrounds the blade, the saw further comprising a release button that extends through the side cover and including a hook movable between an engaged position and a disengaged position, wherein the hook is biased into the engaged position to contact the valve cap to connect the coolant supply to the main body of the saw and the release button is operable to move the hook to the disengaged position to allow the coolant supply to be disconnected from the main body of the saw.

The only motive force utilized to transport the blade coolant to the blade may be gravity.

The valve member may have a first aperture that extends through only a portion of the valve member in a longitudinal direction with respect to the valve member and a second aperture that extends through the valve member and the first aperture in a direction normal to the first aperture.

In another embodiment the invention provides a tile saw that includes a body, a blade supported for rotation by the body, and a coolant supply removably connected to the body. The coolant supply includes a first valve that moves from a closed position to an open position upon connection of the coolant supply to the body and moves from the open position to the closed position in response to disconnection from the body. A second valve is coupled to the body and movable between an open position and a closed position. A fluid path extends between the coolant supply and the blade and includes the first valve and the second valve. The first valve and the second valve are arranged such that both valves must be in the open position to allow for coolant flow from the coolant supply to the blade.

The first valve may include a biasing member that biases the first valve toward the closed position, and wherein a portion of the first valve contacts the body of the saw when the coolant supply is connected to the body of the saw.

The body may include a side cover that at least partially surrounds the blade and at least partially defines an aperture sized to receive a portion of the coolant supply.

The coolant supply may be configured to transport a blade coolant toward the blade, and wherein the only motive force utilized to transport the blade coolant toward the blade is gravity. The coolant supply may include a container and a valve cap threadably engaged with the container.

The valve cap may include a cup-shaped portion and a stationary extension coupled to the cup-shaped portion, wherein the first valve includes a movable valve member movable within the stationary extension and the valve member at least partially extends beyond the stationary extension of the valve cap when the first valve is in the closed position. A biasing member may be at least partially disposed within the stationary extension to bias the valve member toward the closed position.

The stationary extension may contact the main body of the saw to move and retain the first valve in the open position when the coolant supply is connected to the main body.

The valve member may have a first aperture that extends through only a portion of the valve member in a longitudinal direction with respect to the valve member and a second aperture that extends through the valve member and the first aperture in a direction normal to the first aperture.

The main body may include a side cover that at least partially surrounds the blade, the saw further comprising a release button that extends through the side cover and including a hook movable between an engaged position and a disengaged position, wherein the hook is biased into the engaged position to contact the valve cap to connect the coolant supply to the main body of the saw and the release button is operable to move the hook to the disengaged position to allow the coolant supply to be disconnected from the main body of the saw.

In yet another embodiment, the invention provides a saw that includes a body, a motor supported by the body, a blade coupled to the motor and rotatable to cut a work-piece, and a side cover positioned adjacent the blade to cover a portion of the blade during rotation. The saw further includes a coolant supply having a container and a valve coupled to the container. A coolant receptacle is at least partially formed as part of the side cover and is configured to receive a portion of the coolant supply. The valve is movable from a closed position to an open position in response to placement of the coolant supply within the coolant receptacle. A locking member is positioned adjacent the coolant receptacle and is operable to lock the coolant supply within the coolant receptacle, and a release actuator is coupled to the locking member and is actuatable to release the container from the coolant receptacle.

The locking member may be a hook and the release actuator may be a push button that extends through the side cover of the saw.

The coolant supply may include a valve cap that at least partially forms the valve, the valve cap threadably engaged with the container, wherein the hook is movable between an engaged position and a disengaged position, wherein the hook is biased into the engaged position to contact the valve cap to lock the coolant supply within the coolant receptacle and the push button is operable to move the hook to the disengaged position to release the container from the coolant receptacle.

Other aspects of the invention will become apparent by consideration of the detailed description and accompanying drawings.

### BRIEF DESCRIPTION OF THE DRAWINGS

Fig. 1 is a perspective view of a saw embodying the present invention.

Fig. 2 is an enlarged view of a portion of the saw of Fig. 1 with a portion of a side cover of the saw removed.

Fig. 3 is a cross-sectional view of a portion of a coolant supply of the saw of Fig. 1.

Fig. 4 is a cross-sectional view of the saw of Fig. 1 taken along line 4-4 of Fig. 1.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

### DETAILED DESCRIPTION

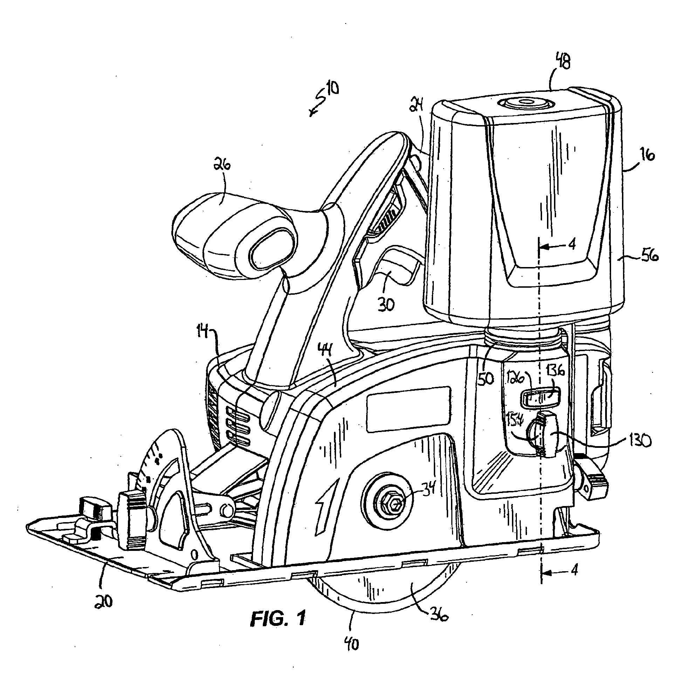

Fig. 1 illustrates a saw 10 that includes a main body 14 and a coolant supply 16. The body 14 includes a shoe 20 that guides the saw 10 along a typically flat surface of a work-piece that is being cut by the saw 10. The body 14 further includes a first or main handle 24 and a second or auxiliary handle 26. A trigger 30 for operating the saw 10 is located adjacent the main handle 24. The body 14 also includes an arbor or drive member 34 and a saw blade 36 that is coupled to the drive member 34. An AC or DC electric motor rotates the arbor 34 in the illustrated embodiment to rotate the saw blade 36. In one construction, the electric motor is a DC electric motor powered by an 18 volt lithium ion battery.

The illustrated saw blade 36 is a circular saw blade having an outer circumferential periphery 40. In one construction, the outer periphery 40 includes diamond blades. As would be understood by one of skill in the art, such diamond blades are particularly suited for cutting relatively hard materials, such as ceramic tiles and the like. Of course, while the illustrated saw 10 is a circularly saw, particularly a circular tile saw, in other embodiments the saw can be other suitable types of saws configured to cut other materials. For example, in other constructions, the saw can be a jig saw, reciprocal saw, and the like.

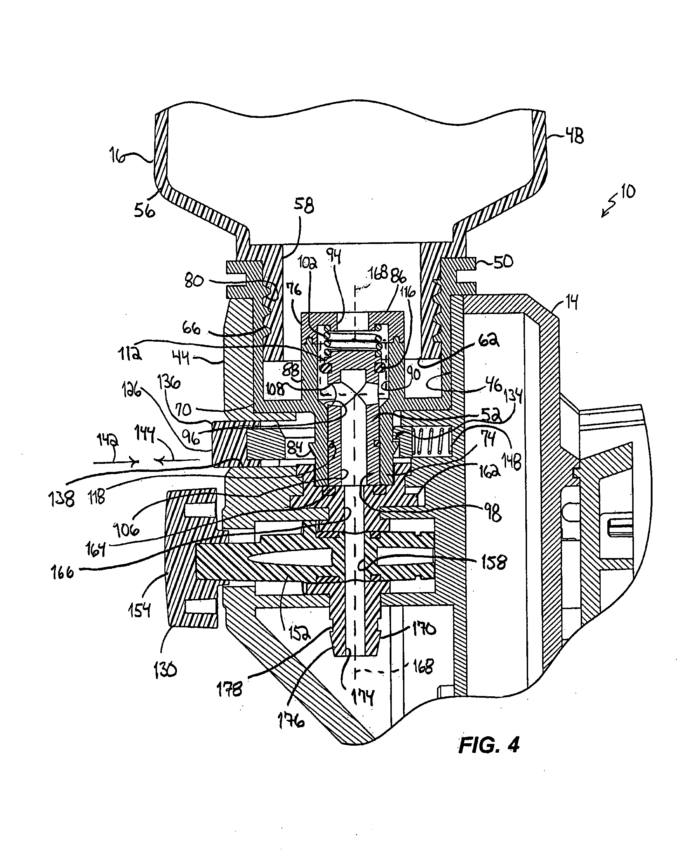

A side cover 44 is coupled to the shoe 20. The side cover 44 covers the periphery 40 of the blade 36 above the shoe 20, as illustrated in Fig. 1. As best seen in Fig. 4, the side cover 44 forms a circular cup-shaped aperture or receptacle 46 that receives the coolant supply 16.

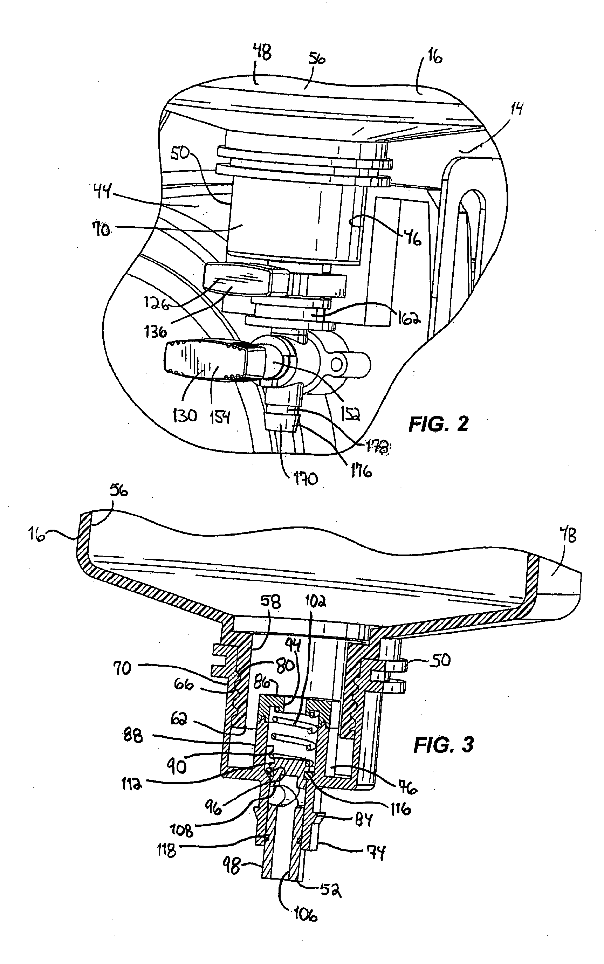

Referring to Figs. 1 and 3, the coolant supply 16 includes a bottle or container 48, valve cap 50, and a valve 52 that is partially formed by the valve cap 50. The container 48 includes a body 56 and a circular neck 58 integrally formed as part of the body 56 and that extends from the body 56. The neck 58 defines an opening 62 of the container 48 and includes threads 66 that extend around the neck 58. In one construction, the container 48 is a molded plastic bottle.

The valve cap 50 includes a cup-shaped portion 70, a generally cylindrical extension 74 that extends outwardly from the cup-shaped portion 70, and a valve body 76 located within the cup shaped portion 70. Threads 80 are located on the inside of the cup-shaped portion 70 and are utilized to removably couple the valve cap 50 to the threads 66 of container 48. A circumferential rib or ledge 84, which is utilized to removably couple the coolant supply 16 to the body 14 of the saw 10, surrounds the outer circumference of the extension 74.

The valve body 76 includes an inner wall 86 and a cylindrical outer wall 88 that together define a cavity 90. An aperture 94 extends through the inner wall 86 to allow fluid to flow from the container 48 into the cavity 90. A valve seat 96 is formed by a countersunk portion between the valve body 76 and the extension 74 of the cap 50.

The valve 52 includes a valve member 98 and a biasing member 102, which is a coil spring in the illustrated embodiment. The valve member 98 is generally cylindrical such that the valve member 98 is received within with cylindrical extension 74 of the valve cap 50 and is movable with respect to the cylindrical extension 74 (compare Figs. 3 in the closed condition and Fig. 4 in the open condition). The valve member 98 includes a blind bore 106 and transverse bore 108 that extends through the blind bore 106. As illustrated in Fig. 3, the blind bore 106 extends through only a portion of the valve member 98 in a longitudinal direction with respect to the valve member 98. The transverse bore 108 extends through the valve member 98 and the blind bore 106 normal or perpendicular to the blind bore 106. The valve member 98 further includes a circumferential ring 112 that limits movement of the valve member 98 within the extension 74. The illustrated valve member 98 further includes an upper seal 116 and a lower seal 118.

Referring to Figs. 2 and 4, the main body 14 of the saw 10 further includes a release member 126 and a second valve 130. The release member 126 includes a locking member 134 and a release actuator 136. In the illustrated embodiment, the locking member 134 is a hook and the release actuator 136 is a push button. The push button 136 extends through an aperture 138 of the side cover 44 such that the release member 126 is slidable within the aperture 138 with respect to the side cover 44 in the directions of arrows 142 (toward a disconnected condition) and 144 (toward a connected condition) of Fig. 4. A biasing member 148, which is a coil spring in the illustrated construction, biases the release member 126 in the direction of arrow 144 of Fig. 4 toward a connected or locked condition.

The second valve 130 includes a valve body 152 and an actuator or handle 154 connected to an end of the valve body 152. The actuator 154 is coupled to the valve body 152 such that manual rotation of the actuator 154 rotates the valve body 152 relative to the side cover 44 of the saw 10. A bore 158 extends transversely through the valve body 152.

With reference to Fig. 4, an upper transition member 162 is located directly adjacent and above the valve body 152. The transition member 162 includes a seal 164 and a bore 166 that extends through the transition member 162. The transition member 162 is positioned within the side cover 44 such that the bore 166 of the transition member 162 and the bore 158 of the valve body 152 are directly aligned to form a portion of a fluid path 168 when the second valve 130 is in the open position, which is the position illustrated in Fig. 4.

A lower transition member 170 is located directly adjacent and below the valve body 152. The lower transition member 170 includes a bore 174. The lower transition member 170 is positioned within the side cover 44 such that the bore 174 of the lower transition member 170 and the bore 158 of the valve body 152 are directly aligned to form the fluid path 168 when the second valve 130 is in the open position illustrated in Fig. 4. The lower transition member 170 further includes a tapered end portion 176 and a circumferential groove 178 adjacent the tapered end portion 176. While not illustrated, the tapered end portion 176 can receive tubing or the like and the groove 178 can receive a clip to couple such tubing to the lower transition member 170. This tubing can be utilized to further direct the fluid path 168 toward the saw blade 36 of Fig. 1.

In operation, with the coolant supply 16 uncoupled or disconnected from the main body 14 of the saw 10, for example, as illustrated in Fig. 3, the user can fill the coolant supply 16 with a blade coolant, such as water. To fill the coolant supply 16, the user removes the valve cap 50 from the container 48 by rotating the valve cap 50. With the valve cap 50 removed, the container 48 can be filled with the blade coolant through the opening 62 of the container 48. After filling, the valve cap 50 is threaded back onto the neck 58 of the container 48 using threads 66 and 80.

When the coolant supply 16 is disconnected from the main body 14, the valve 52 is held in the closed position, which is illustrated in Fig. 3. In the closed position, the transverse bore 108 of the valve member 98 is located within the stationary extension 74 of the valve cap 50. The spring 102 biases the valve member 98 into this closed position and presses the upper seal 116 against the valve seat 96 using the ring 112. In the closed position, blade coolant is inhibited from flowing out of the container 48. More particularly, in the closed position, blade coolant is inhibited from flowing from the cavity 90 to the bore 106 of the valve member 98.

With the valve 52 in the closed position, the user can invert the coolant supply 16 (i.e., position illustrated in Figs. 3 and 4) to couple the coolant supply 16 to the main body 14 of the saw 10 without spilling the blade coolant. To couple or connect the coolant supply 16 to the body 14 of the saw 10, the user inserts the cup-shaped portion 70 of the valve cap 50 into the cup-shaped receptacle 46 in the side cover 44 as illustrated in Figs. 1 and 4. As the valve cap 50 is being inserted into the aperture 46, the ledge 84 of the extension 74 cams against the hook 134 of the release member 126 to move the release member 126 inward or in the direction of arrow 142 against the bias of the spring 148. After the ledge 84 passes the hook 134, the spring 148 moves the release member 126 outward, or in the direction of arrow 144, such that the hook 134 of the release member 126 is positioned over the ledge 84 of the valve cap 50 as illustrated in Fig. 4. Such a position of the release member 126 releasably retains the coolant supply 16 in the connected position and within the receptacle 46.

Also, when the coolant supply 16 is connected to the main body 14 of the saw 10, the valve 52 moves from the closed position (Fig. 3) to the open position (Fig. 4). As illustrated in Fig. 3, in the closed position, a portion of the valve member 98 extends past the end of the stationary extension 74 of the valve cap 50. As the user connects the coolant supply 16 to the main body 14 of the saw 10, the valve member 98 contacts the upper transition member 162 to move the valve member 98 with respect to the extension 74 of the valve cap 50 until the valve member 98 no longer extends past the extension 74. This movement of the valve member 98 places the valve 52 in the open position and the valve member 98 is retained in the open position because of the contact between the valve member 98 and the upper transition member 162. As illustrated in Fig. 4, in the open position, the transverse bore 108 of the valve member 98 is located within the cavity 90.

With the valve 52 in the open position, such that the transverse bore 108 of the valve member 98 is within the cavity 90, blade coolant can flow out of the coolant supply 16 toward the blade 36. Accordingly, blade coolant flows along the fluid path 168 that extends from the container 48, through the aperture 94, past the seal 116, through the transverse bore 108, and into the blind bore 106 of the valve member 98. The coolant continues to flow along the fluid path 168 through the bore 166 of the upper transition member 162. Meanwhile, the lower seal 118 of the valve member 98 and the seal 164 of the upper transition member 162 inhibit coolant flow between the outside of the valve member 98 and the inner wall of the cylindrical extension 74.

The second valve 130 is movable by the user between open and closed positions to control the coolant flow to the blade 36. In the open position, which is illustrated in Fig. 4, the transverse bore 158 of the second valve 130 is directly aligned with the bore 166 of the upper transition member 162. Therefore, coolant is allowed to flow along the fluid path 168 through the bore 158 of the second valve 130 and through the bore 174 of the lower transition member 170 and eventually to the saw blade 36. The user can rotate the handle 154 of the second valve 130 to misalign the bore 158 and the bore 166 of the upper transition member 162 to restrict the amount of coolant flow or close the valve to stop the coolant flow. Accordingly, with the coolant supply 16 connected to the main body 14 of the saw 10, the user can utilize the saw 10 to cut a work piece and control the flow of coolant to the saw blade 36. Furthermore, gravity is the only motive force that is necessary to transport coolant from the container 48 to the blade 36 (i.e., no pumps or the like required in the illustrated embodiment). However, for coolant to flow to the blade 36, both valves 52, 130 must be at least partially open.

To refill the coolant container 48, the user disconnects the coolant supply 16 from the main body 14 of the saw 10. To disconnect the coolant supply 16, the user presses the push button 136 of the release member 126 inward, or in the direction of arrow 142 of Fig. 4. Pushing the push button 136 causes the hook 134 of the release member 126 to disengage the ledge 84 of the extension 74. With the ledge 84 and hook 134 disengaged, the user can pull upwardly on the container 48 to remove or disconnect the coolant supply 16. As the user begins to remove the coolant supply 16, the valve member 98 remains in contact with the upper transition member 162 because of bias of the spring 102. The valve member 98 remains in contact with the upper transition member 162 until the valve 52 is in the closed position. Therefore, the user can remove the coolant supply 16 for refilling with little or no spillage of coolant that remains in the coolant supply 16.

In general, the invention provides a saw for use with a blade coolant that includes a main body, a blade supported for rotation by the main body, and a drive member coupled to the blade and operable to rotate the blade. The saw further includes a coolant supply that is removably coupled to the main body and configured to store the blade coolant. A valve is coupled to the coolant supply, and the valve includes a valve member movable between an open position and a closed position. The valve member is held in the open position when the coolant supply is connected to the main body of the saw and the valve member is biased toward the closed position when the coolant supply is disconnected from the main body of the saw.

While the invention has been illustrated and described in detail in the drawings and foregoing description, the same is to be considered as illustrative and not restrictive in character, it being understood that only exemplary embodiments have been shown and described and do not limit the scope of the invention in any manner. It can be appreciated that any of the features described herein may be used with any embodiment. The illustrative embodiments are not exclusive of each other or of other embodiments not recited herein. Accordingly, the invention also provides embodiments that comprise combinations of one or more of the illustrative embodiments described above. Modifications and variations of the invention as herein set forth can be made without departing from the spirit and scope thereof, and, therefore, only such limitations should be imposed as are indicated by the appended claims.

## Claims

1. A saw configured for use with a blade coolant, the saw comprising:
a main body;
a blade supported for rotation by the main body;
a drive member coupled to the blade and operable to rotate the blade;
a coolant supply removably coupled to the main body and configured to store the blade coolant; and
a valve coupled to the coolant supply, the valve including a valve member movable between an open position and a closed position,
wherein the valve member is held in the open position when the coolant supply is connected to the main body of the saw and the valve member is biased toward the closed position when the coolant supply is disconnected from the main body of the saw.

2. The saw of claim 1, wherein the valve further includes a biasing member that biases the valve member toward the closed position, wherein the valve member contacts the main body to retain the valve member in the open position when the coolant supply is connected to the main body and the biasing member biases the valve member into the closed position when the coolant supply is disconnected from the main body.

3. The saw of claim 1 or claim 2, wherein the main body includes a side cover that at least partially surrounds the blade and at least partially defines an aperture sized to receive a portion of the coolant supply.

4. The saw of claim 3, wherein the coolant supply includes a valve cap, and wherein the valve cap is at least partially received in the aperture to connect the coolant supply to the main body of the saw.

5. The saw of claim 1, wherein the coolant supply includes a container and a valve cap threadably engaged with the container.

6. The saw of claim 5, wherein the valve cap includes a cup-shaped portion and a stationary extension coupled to the cup-shaped portion, wherein the valve member at least partially extends beyond the stationary extension of the valve cap when the valve member is in the closed position.

7. The saw of claim 6, wherein a biasing member is at least partially disposed within the stationary extension to bias the valve member toward the closed position.

8. The saw of claim 6 or claim 7, wherein the stationary extension contacts the main body of the saw to move and retain the valve member in the open position when the coolant supply is connected to the main body.

9. The saw of any one of claims 5 to 8, wherein the main body includes a side cover that at least partially surrounds the blade, the saw further comprising a release button that extends through the side cover and including a hook movable between an engaged position and a disengaged position, wherein the hook is biased into the engaged position to contact the valve cap to connect the coolant supply to the main body of the saw and the release button is operable to move the hook to the disengaged position to allow the coolant supply to be disconnected from the main body of the saw.

10. The saw of any one of the preceding claims, wherein the only motive force utilized to transport the blade coolant to the blade is gravity.

11. The saw of any one of the preceding claims, wherein the valve member has a first aperture that extends through only a portion of the valve member in a longitudinal direction with respect to the valve member and a second aperture that extends through the valve member and the first aperture in a direction normal to the first aperture.

12. A tile saw comprising:
a body;
a blade supported for rotation by the body;
a coolant supply removably connected to the body, the coolant supply including a first valve that moves from a closed position to an open position upon connection of the coolant supply to the body and moves from the open position to the closed position in response to disconnection from the body;
a second valve coupled to the body and movable between an open position and a closed position; and
a fluid path that extends between the coolant supply and the blade and includes the first valve and the second valve, the first valve and the second valve arranged such that both valves must be in the open position to allow for coolant flow from the coolant supply to the blade.

13. The tile saw of claim 12, wherein the first valve includes a biasing member that biases the first valve toward the closed position, and wherein a portion of the first valve contacts the body of the saw when the coolant supply is connected to the body of the saw.

14. A saw comprising:
a body;
a motor supported by the body;
a blade coupled to the motor and rotatable to cut a work-piece;
a side cover positioned adjacent the blade to cover a portion of the blade during rotation;
a coolant supply including a container and a valve coupled to the container;
a coolant receptacle at least partially formed as part of the side cover and configured to receive a portion of the coolant supply, the valve movable from a closed position to an open position in response to placement of the coolant supply within the coolant receptacle;
a locking member positioned adjacent the coolant receptacle and operable to lock the coolant supply within the coolant receptacle; and
a release actuator coupled to the locking member and actuatable to release the container from the coolant receptacle.

15. The saw of claim 14, wherein the locking member is a hook and the release actuator is a push button that extends through the side cover of the saw.
